# EUROPEAN PATENT SPECIFICATION

(11) **EP 3 608 698 B1**
(45) Date of publication and mention of the grant of the patent: **03.11.2021**
(21) Application number: 19190604.9
(22) Date of filing: 07.08.2019
(51) Int. Cl.: G02B 6/44, H02G 3/06, H02G 15/007

(54) **A GLAND FOR SECURING TUBES OR CABLES**
DURCHFÜHRUNG ZUR BEFESTIGUNG VON ROHREN ODER KABELN
PRESSE-ÉTOUPE POUR LA FIXATION DE TUBES OU DE CÂBLES

(30) Priority: 09.08.2018 IT 201800008001; 28.11.2018 IT 201800010647
(43) Date of publication of application: 12.02.2020
(73) Proprietor: Prysmian S.p.A., 20126 Milan (IT)
(72) Inventor: PADDICK, Nathan, 20126 Milano (IT)
(74) Representative: Perani & Partners S.p.A.

(56) References cited:
- EP-A1- 2 950 125
- EP-A1- 2 999 070
- GB-A- 2 555 113
- US-B1- 6 284 973

## Description

### Field of the invention

The present invention relates to the field of equipment and components for the insertion of optical cables in optical network closures, e.g. into an optical joint closure, optical network terminal, distribution box or others optical junction boxes. In particular, the present invention relates to a gland for tubes or cables.

### Background of the invention

Typically, optical fibres enter into optical network closures through tubes or cables glands, which are intended to provide a safe mechanical connection of the tubes or cables to the optical network closure.

The blown tubes of fibres do not contain a strength member configured to avoid that external forces may cause the disconnection of the tubes from the optical network closure. Furthermore, the blown tubes are normally made with low friction materials. The same applies to fibres cables which may disconnect from the optical network closures.

Consequently, gland should secure the tube or the cable to the connection box/optical network closure without any strength member. In particular, in order to avoid the tube or gland extraction or movement, a sufficient clamping force is required between the gland and the tubes or cables.

US 5,078,432 discloses conduit sections of a multiple duct conduit system where each section includes a coupling assembly mounted at one end of each conduit section, with the coupling assembly including an outer cylindrical coupling and an inner coupling. The inner coupling includes an inner receptacle having a support plate with sockets mounted to both sides of the support plate in alignment with openings in the support plate. O-rings are seated in annular grooves of the passageways formed by the sockets, and internal flanges project inwardly of each passageway. When the conduit sections are connected in end-to-end relationship, the protruding inner ducts of one conduit section are moved into the coupling assembly until the inner ducts are moved into the inner coupling assembly, whereupon the relatively small openings of the O-rings are stretched so as to permit passage therethrough of the inner ducts. This forms a seal about the inner ducts.

GB 2 421 641 A discloses a multi-tube terminal connector for connecting tubes into which optical fibres are to be installed by the blown fibre technique, comprising a gripping gland arranged to receive and fit onto a cable of closely packed tubes, and a spreader provided with guideways to splay the tubes received by the gripping gland from their initially closely packed state to a spaced relationship where the spacing is greater than the spacing at the initially closely packed state, the arrangement being such that provision is made so as to connect the connector to at least one further element.

EP 2 950 125 A1 discloses a torsion resistant cable gland for reducing torsion of an optical cable partially insertable in a base of an optical joint closure. The cable gland comprises a central body longitudinally extended along a longitudinal direction between a first end and a second end and configured to receive the optical cable passing through said ends, wherein when the central body is partially inserted in the optical joint closure, the first end is positioned inside the inner volume of the optical joint closure and the second end is positioned outside the optical joint closure for receiving a clamping nut. The cable gland also comprises a cable anti torsion element attached to the second end of the central body and cooperating with the clamping nut so that when the clamping nut is screwed on the second end, the cable anti torsion element prevents the cable from rotating with respect to the central body.

WO 2011/005371 A1 discloses a sealing member for use in an entry port of an enclosure. The sealing member has a body portion including at least one opening extending through the body portion from a first end of the sealing member to a second end of the sealing member and at least one plug formed integrally with the body portion to block the at least one opening. The at least one plug is connected to the body portion by a thin web within the at least one opening and extends beyond a surface of the body portion. The at least one plug can be removed so that a cable may be inserted through the at least one opening in the sealing member.

EP2999070 A1 discloses a cable gland with a body and a retention element as well as means to prevent rotation between the body and part of the retention element.

### Summary of the invention

The Applicant has tackled the problem of providing a gland capable of tightening tubes or cables without the strength member and providing a firm and reliable engagement between the tube or cable and the gland, avoiding torsion or movements of the tubes or cables relative to the gland.

The Applicant has found that providing a retention element for tubes or cables surrounded by a gland body, an anti-rotation arrangement to prevent mutual rotation of the gland body relative to the retention element and a firm engagement between the tubes or cables and the gland reduce and/or avoid any relative movement of the gland and tube or cable.

Therefore, the present invention relates to a gland for securing tubes or cables to a box, the gland comprising a retention element configured to surround two or more tubes or cables, the retention element having at least two connecting ends mutually approachable to tighten the retention element on the tubes or cables, a gland body extending along an axial direction between a first end and a second end and having an axis extending along the axial direction, the gland body defining a passing through channel extending along the axial direction between the first end and the second end and configured to receive the tubes or cables passing through the first and second ends, the gland body surrounding at least partially the retention element, the gland comprises an anti-torsion arrangement configured to prevent mutual rotation about the axis of the gland body relative to the retention element, the anti-torsion arrangement comprises one or more first anti-torsion elements associated with the retention element, each first anti-torsion element comprises a seat, one or more second anti-torsion elements associated with the gland body, each second anti-torsion comprises a protrusion configured to engage and fit in the seat to prevent mutual rotation of the gland body relative to the retention element about the axis, wherein the first anti-torsion element is formed on an outer surface of the retention element and the second anti-torsion element is formed on an inner surface of the gland body.

The seat extends along the axial direction at least partially along the outer surface of the retention element, the protrusion extends at least partially along the inner surface of the gland body.

Preferably, the inner surface of the gland body is tapered to tighten the retention element thereby tightening the retention element on the tubes or cables.

Preferably, the retention element comprises inner friction members configured to engage the tubes or cables.

Preferably, the retention element comprises a first semi annular member and a second semi annular member mutually approachable to surround and tighten the tubes or cables.

Preferably, each first and second semi annular member has two connecting ends, the connecting ends of the first semi annular member are configured to be approached to the connecting ends of the second semi annular member by tapered inner surfaces of the gland body to tighten the retention element on tubes or cables.

Preferably, a screw annular member is arranged at the second end of the gland body, the screw annular member surrounds at least partially the gland body at the second end and couples with the second end of gland body.

Preferably, an anti-torsion device is provided at the second end of the gland body and cooperates with the screw annular member to prevent mutual rotation of the tubes or cables with respect to gland body, the screw annular member surrounds at least partially the anti-torsion device at the second end of the gland body.

Preferably, the gland body comprises a locking arrangement configured to axially lock the retention element inside the gland body.

### Brief description of the drawings

The present invention will now be described in more detail hereinafter with reference to the accompanying drawings, in which some embodiments of the invention are shown.
FIG. 1 is a schematic view of a gland in a disassembled configuration according to one embodiment of the present invention,

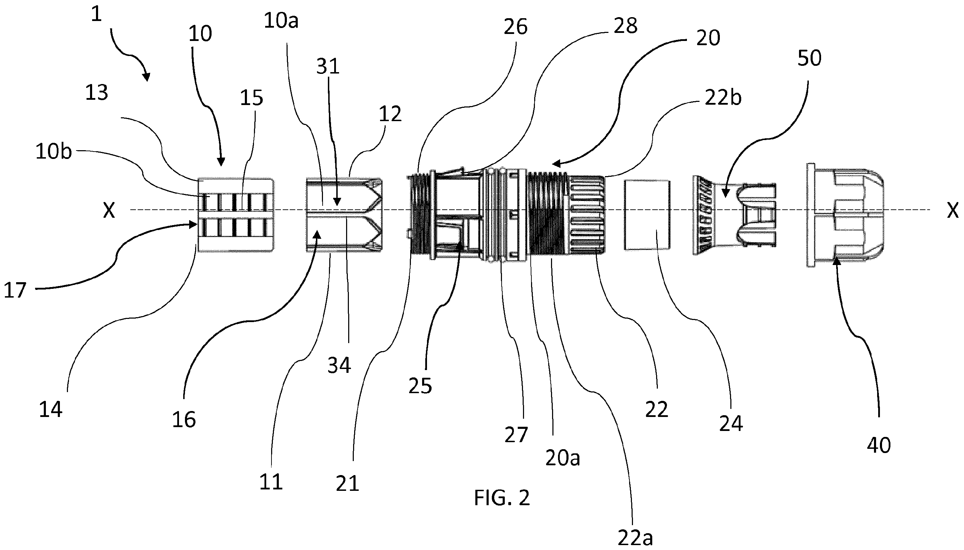

FIG. 2 is a schematic view of a gland in an unassembled configuration according to one embodiment of the present invention,

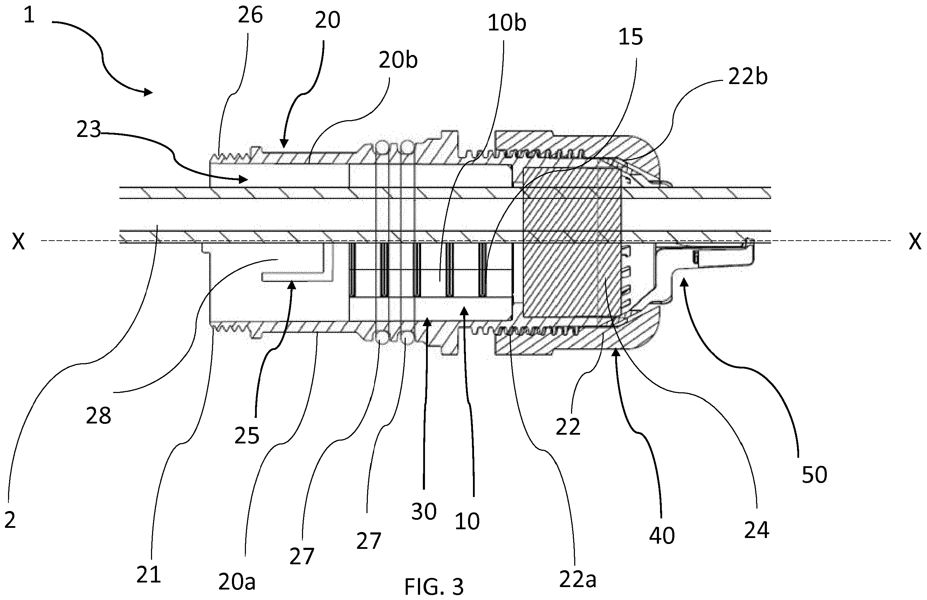

FIG. 3 is a schematic view of a gland of FIG. 1 in an assembled configuration.

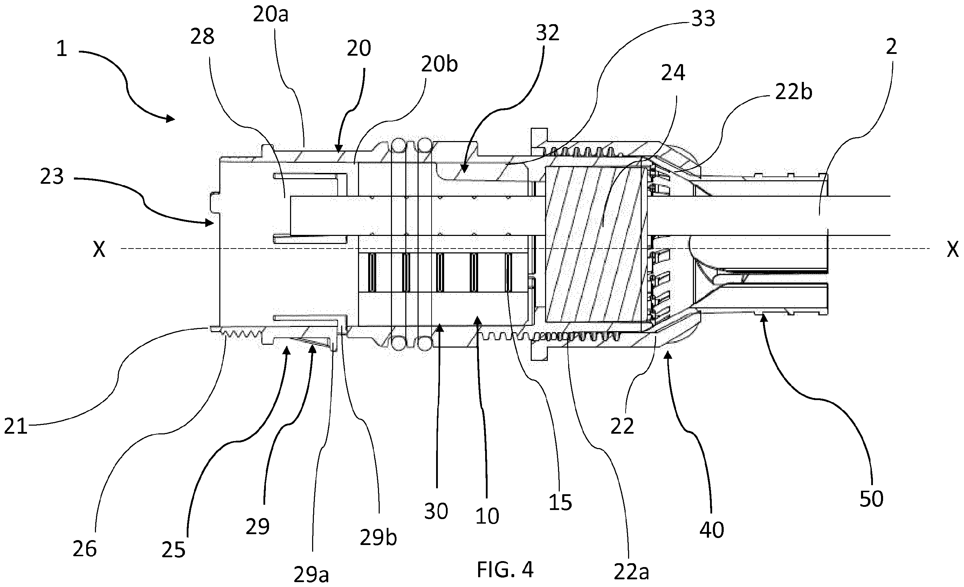

FIG. 4 is a schematic view of a gland of FIG. 2 in an assembled configuration.

### Detailed description

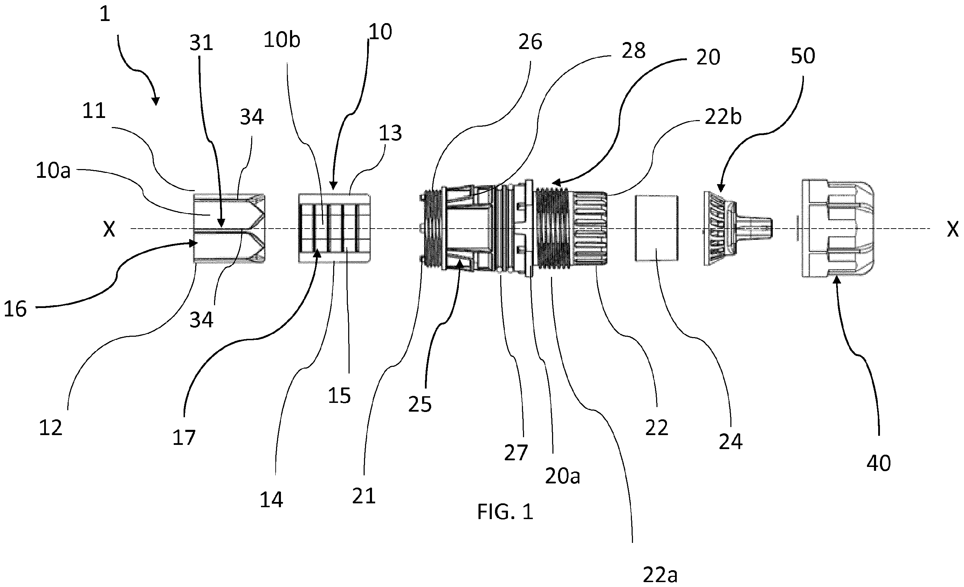

Figure 1 shows a gland 1 adapted to secure a plurality of tubes or cables 2 to a connection or distribution box, not illustrated. Preferably, tubes 2 are blown tubes for blown fibre applications or low friction material tubes of standard optical fibre cables. The gland 1 is also adapted to secure a plurality of cables 2 to the connection or the distribution box, such as electric cables, hybrid cables or optical fibre cables. Indeed, tubes may be considered as the outer sheath of cables.

The gland 1 comprises a gland body 20 and a retention element 10. Hereinafter, for sake of simplicity and in a non-limiting manner, reference will be made to a gland for tubes.

The gland body 20 extends along an axial direction X-X between a first end 21 and a second end 22 opposed to the first end 21 and has an axis X extending along the axial direction X-X.

Preferably, the gland body 20 comprises a connecting portion 26 configured to connect the gland body 20 with a box, such as a distribution box, or to an optical joint closure.

The gland body 20 defines a passing through channel 23 extending between the first end 21 and the second end 22 along the axial direction X-X. The passing through channel 23 is configured to receive the tubes 2 passing through the first end 21 and the second end 22.

The gland body 20 has an outer surface 20a and an opposite inner surface 20b facing the tubes 2.

The gland body 20 at least partially surrounds the retention element 10, preferably at the first end 21. The retention element 10 is therefore arranged in the passing through channel 23. In particular, the inner surface 20b of the gland body 20 faces the retention element 10.

Preferably, the gland body 20 completely surrounds the retention element 10.

According to one embodiment, the inner surface 20b of the gland body 20 is tapered so that the tapering tightens the retention element 10 on the tubes 2. Preferably the inner surface 20b of the gland body 20 tapers from the first end 21 to the second end 22 of the gland body 20.

Advantageously, the tapered inner surface 20b of the gland body 20 allows to adjust the compression exerted on the tubes 2 by the retention element 10 and, therefore, to adjust the tightening of the retention element 10 on the tubes 2.

According to one embodiment, the gland body 20 comprises a locking arrangement 25 configured to axially lock the retention element 10 inside the gland body 20. Preferably, the locking arrangement 25 is positioned at the first end 21 of the gland body 20.

The locking arrangement 25 comprises one or more locking elements 28 configured to axially lock the retention element 10 inside the gland body 20 and to fasten the gland 1 to the box.

Each locking element 28 comprises an elastically deformable tab 29 having an outer part 29a configured to cooperate with the box to fasten the gland 1 to the box and an inner part 29b configured to cooperate with the retention element 10 to axially lock the retention element 10 inside the passing through channel 23.

The outer part 29a of the tab 29 protrudes outside the gland body 20 from the outer surface 20a and the inner part 29b protrudes inside the gland body 20 from the inner surface 20b.

The retention element 10 is configured to be arranged in the gland body 20 and is configured to surround the tubes 2 and to be tightened on the tubes 2 by the gland body 20.

According to the one embodiment, the retention element 10 comprises a first semi annular member 16 and a second semi annular member 17 mutually approachable to surround and tighten the tubes 2.

In particular, the first semi annular member 16 has two connecting ends 11, 12 and the second semi annular member 17 has two connecting ends 13, 14.

The connecting ends 11, 12 of the first semi annular member 16 are configured to be approached to the connecting ends 13, 14 of the second semi annular member 17 by, preferably tapered, inner surface 20b of the gland body 20 to tighten the retention element 10 on the tubes 2. Therefore, approaching the connecting ends 11, 12, 13, 14 of the retention element 10 increases the tightening of the retention element 10 on the tubes 2. Specifically, the tapering of the inner surface 20b of the gland body 20 forces the connecting ends 11, 12, 13, 14 to mutually approach and tighten the retention element 10 on the tubes 2.

The retention element 10 has an outer surface 10a facing the gland body 20 and an inner surface 10b facing the tubes 2.

Preferably, the inner surface 10b of the retention element 10 comprises friction members 15 configured to increase the grip of the retention element 10 on the tubes 2. More preferably, the friction members 15 are protrusions projecting from the inner surface 10b of the tightening element 10 towards the tubes 2.

According to one embodiment, the retention element 10 has one or more slots configured to accommodate the tubes 2, thereby avoiding any deformation of the tubes 2 while the tubes 2 are retained by the retention element 10.

Approaching the connecting ends 11, 12, 13, 14 of the retention element 10 allows the protrusions of the friction members 15 to act on the tubes 2 and increases the gripping force of the retention element 10 on the tubes 2.

The gland 1 comprises an anti-torsion arrangement 30 configured to prevent mutual rotation of the gland body 20 relative to the retention element 10 about the axis X. Thanks to this anti-torsion arrangement 30, the retention element 10 is firmly attached to the gland body 20 and a firm and reliable engagement between the tubes 2 and the gland body 20 is assured.

Preferably, the anti-torsion arrangements 30 is arranged at the first end 21 of the gland body 20. More preferably, the anti-torsion arrangement 30 extends between the first end 21 and the second end 22 of the gland body 20.

The anti-torsion arrangement 30 comprises one or more first anti-torsion elements 31 and one or more second anti-torsion element 32 configured to engage with the first anti-torsion elements 31. In the embodiment shown in the figures, each first anti-torsion element 31 is associated with the retention element 10 and each second anti-torsion element 32 is associated with the gland body 20. In an alternative embodiment, each first anti-torsion element 31 is associated with the gland body 20 and each second anti-torsion element 32 is associated with the retention element 10.

Engagement of the first anti-torsion elements 31 with the second anti-torsion elements 32 prevents mutual rotation of the gland body 20 relative to the retention element 10 about the axis X.

Preferably, each first anti-torsion element 31 comprises a seat 34 and each second anti-torsion element 32 comprises a protrusion 33 configured to engage and fit in the seat 34 to prevent mutual rotation of the gland body 20 relative to the retention element 10.

In particular, the first anti-torsion elements 31 are formed on the outer surface 10a of the retention element 10 and the second anti-torsion elements 32 are formed on the inner surface 20b of the gland body 20. Preferably, the protrusions 33 project from the inner surface 20b of the gland body 20 towards the passing through channel 23.

Each seat 34 extends along the axial direction X-X at least partially along the outer surface 10a of the retention element 10 and is configured to receive a corresponding protrusion 33. Such seats 34 allow the protrusions 33 to slide therein along the axial direction X-X so that the retention element 10 is able to slide axially relative to the gland body 20 while maintaining the angular orientation with respect to the gland body 20 since the engagement of the seats 34 and protrusions 33 avoids the mutual rotation of the gland body 20 relative to the retention element 10 about the axis X.

Advantageously, the tapered inner surface 20b allows the anti-torsion arrangement 30 to further compress the retention element 10 on the tubes 2 and so increases the tightening of the gland body 20 on the retention element 10.

According to the embodiment shown in the figures, the first anti-torsion elements 31 comprise six seats 34 extending along the whole axial extension of the retention element 10. Preferably, the second anti-torsion elements 32 comprise three protrusions 33 projecting from the inner surface 20b of gland body 20 towards the passing through channel 23.

Advantageously, the six seats 34 prevent an excessive mutual rotation of the retention element 10 relative to the gland body 20 during the coupling of the retention element 10 with the three corresponding protrusions 33 of the gland body.

Preferably, the first anti-torsion elements 31 and the second anti-torsion elements 32 are angularly spaced along the outer surface 10a of the retention element 10 and the inner surface 20b of the gland body 20.

The cable gland 1 further comprises a seal 24 configured to surround the tubes 2 and arranged in the passing through channel 23 at the second end 22.

The gland body 20 at least partially surrounds the seal 24 at the second end 22. Preferably the gland body 20 completely surrounds the seal 24.

Preferably, the seal 24 and the gland body 20 define an interference fit to further increase the tightening and secure the tubes 2.

Preferably, the seal 24 has an annular shape and is configured to be mounted inside the passing through channel 23 to surround the tubes 2, thereby providing additional retaining force between the tubes 2 and the gland body 20.

Preferably, the seal 24 is made of rubber or any other suitable sealing material.

According to one embodiment the gland 1 further comprises a screw annular member 40 arranged at the second end 22. Preferably, the screw annular member 40 surrounds at least partially the gland body 20 at the second end 22 and couples with the outer surface 20a of the gland body 20 at the second end 22.

The gland body 20 comprises, at the second end 22, a threaded portion 22a configured to couple with the screw annular member 40.

Advantageously, the screw annular member 40 further compresses the seal 24 at the second end 22 providing further tightening on tubes 2.

According to one embodiment, the gland 1 further comprises an anti-torsion device 50 at the second end 22 of the gland body 20 which cooperates with the screw annular member 40 to prevent mutual rotation of the tubes 2 with respect to gland body 20.

According the embodiment shows in the figures, the gland body 20 comprises a plurality of flexible fingers 22b at the second end 22 configured be coupled with the anti-torsion device 50. In particular, the anti-torsion device 50 is attachable to the flexible fingers 22b and, when the screw annular member 40 is screwed on the threaded portion 22a of the gland body 20, the anti-torsion device 50 is constrained to the flexible fingers 22a avoiding mutual rotation with respect to the gland body 20 about the axis X.

According the embodiment shows in the figures the screw annular member 40 surrounds at least partially the anti-torsion device 50 at the second end 22 of the gland body 20.

Preferably, further seals 27 are positioned between the cable gland 1 and the box in order to protect the box and the cable gland 1 against water flow or other type intrusions.

## Claims

1. A gland (1) for securing tubes or cables (2) to a box, the gland (1) comprising:
- a retention element (10) configured to surround two or more tubes or cables (2), the retention element (10) having at least two connecting ends (11, 12, 13, 14, 15) mutually approachable to tighten the retention element (10) on the tubes or cables (2),
- a gland body (20) extending along an axial direction (X-X) between a first end (21) and a second end (22) and having an axis (X) extending along the axial direction (X-X), the gland body (20) defining a passing through channel (23) extending along the axial direction (X-X) between the first end (21) and the second end (22) and configured to receive the tubes or cables (2) passing through the first (21) and second ends (22), the gland body (20) surrounding at least partially the retention element (10),
the gland (1) comprises an anti-torsion arrangement (30) configured to prevent mutual rotation about the axis (X) of the gland body (20) relative to the retention element (10), the anti-torsion arrangement (30) comprises:
- one or more first anti-torsion elements (31) associated with the retention element (10), each first anti-torsion element (31) comprises a seat (34),
- one or more second anti-torsion elements (32) associated with the gland body (20), each second anti-torsion element (32) comprises a protrusion (33) configured to engage and fit in the seat (34) to prevent mutual rotation of the gland body (20) relative to the retention element (10) about the axis (X),
wherein
- the first anti-torsion element (31) is formed on an outer surface (10a) of the retention element (10);
- the second anti-torsion element (32) is formed on an inner surface (20b) of the gland body (20),
- the seat (34) extends along the axial direction (X-X) at least partially along the outer surface (10a) of the retention element (10);
- the protrusion (33) extends at least partially along the inner surface (20b) of the gland body (20).

2. The gland (1) according to claim 1, wherein:
- the inner surface (20b) of the gland body (20) is tapered to tighten the retention element (10) thereby tightening the retention element (10) on the tubes or cables (2).

3. The gland (1) according to claims 1 or 2, wherein:
- the retention element (10) comprises inner friction members (15) configured to engage the tubes or cables (2).

4. The gland (1) according to anyone of claims 1 to 3, wherein:
- the retention element (10) comprises a first semi annular member (16) and a second semi annular member (17) mutually approachable to surround and tighten the tubes or cables (2).

5. The gland (1) according to claim 4, wherein each first (16) and second semi annular member (17) has two connecting ends (11, 12, 13, 14), the connecting ends (11, 12) of the first semi annular member (16) are configured to be approached to the connecting ends (13, 14) of the second semi annular member (17) by tapered inner surfaces (20b) of the gland body (20) to tighten the retention element (10) on tubes or cables (2).

6. The gland (1) according to anyone of claims 1 to 5, wherein:
- a screw annular member (40) is arranged at the second end (22) of the gland body (20);
- the screw annular member (40) surrounds at least partially the gland body (20) at the second end (22) and couples with the second end (22) of gland body (20).

7. The gland (1) according to claim 6, wherein:
- an anti-torsion device (50) is provided at the second end (22) of the gland body (20) and cooperates with the screw annular member (40) to prevent mutual rotation of the tubes or cables (2) with respect to gland body (20);
- the screw annular member (40) surrounds at least partially the anti-torsion device (50) at the second end (22) of the gland body (20).

8. The gland (1) according to anyone of claims 1 to 7, wherein:
- the gland body (20) comprises a locking arrangement (25) configured to axially lock the retention element (10) inside the gland body (20).

## Patentansprüche

1. Eine Durchführung (1) zur Befestigung von Rohren oder Kabeln (2) an einer Dose, wobei die Durchführung (1) umfasst:
- ein Rückhalteelement (10), das so konfiguriert ist, dass es zwei oder mehr Rohre oder Kabel (2) umgibt, wobei das Rückhalteelement (10) mindestens zwei Verbindungsenden (11, 12, 13, 14, 15) aufweist, die sich gegenseitig annähern können, um das Rückhalteelement (10) an den Rohren oder Kabeln (2) festzuziehen,
- einen Stopfbuchsenkörper (20), der sich entlang einer axialen Richtung (X-X) zwischen einem ersten Ende (21) und einem zweiten Ende (22) erstreckt und eine Achse (X) aufweist, die sich entlang der axialen Richtung (X-X) erstreckt, wobei der Stopfbuchsenkörper (20) einen Durchgangskanal (23) definiert, der sich entlang der axialen Richtung (X-X) zwischen dem ersten Ende (21) und dem zweiten Ende (22) erstreckt und so konfiguriert ist, dass er die Rohre oder Kabel (2) aufnimmt, die durch das erste (21) und das zweite Ende (22) hindurchgehen, wobei der Stopfbuchsenkörper (20) das Rückhalteelement (10) zumindest teilweise umgibt, und die Durchführung (1) eine Anti-Torsionsanordnung (30) umfasst, die so konfiguriert ist, dass sie eine gegenseitige Drehung um die Achse (X) des Stopfbuchsenkörpers (20) relativ zum Rückhalteelement (10) verhindert, die Anti-Torsionsanordnung (30) umfasst:
- ein oder mehrere erste Antitorsionselemente (31), die dem Rückhalteelement (10) zugeordnet sind, wobei jedes erste Antitorsionselement (31) einen Sitz (34) aufweist, ein oder mehrere zweite Antitorsionselemente (32), die dem Stopfbuchsenkörper (20) zugeordnet sind, jedes zweite Anti-Torsions-Element (32) einen Vorsprung (33) umfasst, der so konfiguriert ist, dass er in den Sitz (34) eingreift und hineinpasst, um eine gegenseitige Drehung des Stopfbuchsenkörpers (20) relativ zu dem Rückhalteelement (10) um die Achse (X) zu verhindern, wobei das erste Anti-Torsions-Element (31) an einer Außenfläche (10a) des Rückhalteelements (10) ausgebildet ist;
- das zweite Anti-Torsions-Element (32) an einer Innenfläche (20b) des Stopfbuchsenkörpers (20) ausgebildet ist, der Sitz (34) sich entlang der axialen Richtung (X-X) zumindest teilweise entlang der Außenfläche (10a) des Halteelements (10) erstreckt;
- der Vorsprung (33) sich zumindest teilweise entlang der Innenfläche (20b) des Stopfbuchsenkörpers (20) erstreckt.

2. Die Durchführung (1) nach Anspruch 1, wobei:
- die Innenfläche (20b) des Stopfbuchsenkörpers (20) verjüngt ist, um das Rückhaltelement (10) festzuziehen, wodurch das Rückhaltelement (10) auf den Rohren oder Kabeln (2) festgezogen wird.

3. Die Durchführung (1) nach Anspruch 1 oder 2, wobei:
- das Rückhalteelement (10) innere Reibungselemente (15) umfasst, die so konfiguriert sind, dass sie an den Rohren oder Kabeln (2) angreifen.

4. Die Durchführung (1) nach einem der Ansprüche 1 bis 3, wobei:
- das Rückhalteelement (10) ein erstes halbringförmiges Element (16) und ein zweites halbringförmiges Element (17) umfasst, die sich gegenseitig annähern können, um die Rohre oder Kabel (2) zu umgeben und festzuziehen.

5. Durchführung (1) nach Anspruch 4, wobei jedes erste (16) und zweite halbringförmige Element (17) zwei Verbindungsenden (11, 12, 13, 14) aufweist, wobei die Verbindungsenden (11, 12) des ersten halbringförmigen Elements (16) so konfiguriert sind, dass sie sich den Verbindungsenden (13, 14) des zweiten halbringförmigen Elements (17) durch verjüngte Innenflächen (20b) des Stopfbuchsenkörpers (20) annähern, um das Rückhalteelement (10) auf Rohren oder Kabeln (2) festzuziehen.

6. Durchführung (1) nach einem der Ansprüche 1 bis 5, wobei:
- am zweiten Ende (22) des Stopfbuchsenkörpers (20) ein Schraubenringelement (40) angeordnet ist;
- das Schraubenringelement (40) den Stopfbuchsenkörper (20) am zweiten Ende (22) zumindest teilweise umschließt und mit zweiten Ende (22) des Stopfbuchsenkörpers (20) koppelt.

7. Die Durchführung (1) nach Anspruch 6, wobei:
- eine Verdrehsicherung (50) am zweiten Ende (22) des Stopfbuchsenkörpers (20) vorgesehen ist und mit dem Schraubenringelement (40) zusammenwirkt, um eine gegenseitige Verdrehung der Schläuche oder Kabel (2) in Bezug auf den Stopfbuchsenkörper (20) zu verhindern;
das Schraubenringelement (40) zumindest teilweise die Verdrehsicherung (50) am zweiten Ende (22) des Stopfbuchsenkörpers (20) umgibt.

8. Durchführung (1) nach einem der Ansprüche 1 bis 7, wobei:
- der Stopfbuchsenkörper (20) eine Verriegelungsanordnung (25) umfasst, die so konfiguriert ist, dass sie das Rückhalteelement (10) innerhalb des Stopfbuchsenkörpers (20) axial verriegelt.

## Revendications

1. Presse-étoupe (1) pour fixer des tubes ou câbles (2) à un boîtier, le presse-étoupe (1) comprenant :
- un élément de rétention (10) configuré pour entourer deux tubes ou câbles (2) ou plus, l'élément de rétention (10) ayant au moins deux extrémités de raccordement (11, 12, 13, 14, 15) pouvant se rapprocher mutuellement pour serrer l'élément de rétention (10) sur les tubes ou câbles (2),
- un corps de presse-étoupe (20) s'étendant le long d'une direction axiale (X-X) entre une première extrémité (21) et une seconde extrémité (22) et ayant un axe (X) s'étendant le long de la direction axiale (X-X), le corps de presse-étoupe (20) définissant un canal traversant (23) s'étendant le long de la direction axiale (X-X) entre la première extrémité (21) et la seconde extrémité (22) et configuré pour recevoir les tubes ou câbles (2) traversant les première (21) et seconde extrémités (22), le corps de presse-étoupe (20) entourant au moins partiellement l'élément de rétention (10),
le presse-étoupe (1) comprend un agencement anti-torsion (30) configuré pour empêcher une rotation mutuelle autour de l'axe (X) du corps de presse-étoupe (20) par rapport à l'élément de rétention (10), l'agencement anti-torsion (30) comprend :
- un ou plusieurs premiers éléments anti-torsion (31) associés à l'élément de rétention (10), chaque premier élément anti-torsion (31) comprend une assise (34),
- un ou plusieurs seconds éléments anti-torsion (32) associés au corps de presse-étoupe (20), chaque second élément anti-torsion (32) comprend une protubérance (33) configurée pour venir en prise et s'adapter dans l'assise (34) pour empêcher une rotation mutuelle du corps de presse-étoupe (20) par rapport à l'élément de rétention (10) autour de l'axe (X),
dans lequel
- le premier élément anti-torsion (31) est formé sur une surface externe (10a) de l'élément de rétention (10) ;
- le second élément anti-torsion (32) est formé sur une surface interne (20b) du corps de presse-étoupe (20),
- le siège (34) s'étend le long de la direction axiale (X-X) au moins partiellement le long de la surface externe (10a) de l'élément de rétention (10) ;
- la protubérance (33) s'étend au moins partiellement le long de la surface interne (20b) du corps de presse-étoupe (20).

2. Presse-étoupe (1) selon la revendication 1, dans lequel :
- la surface interne (20b) du corps de presse-étoupe (20) est conique pour serrer l'élément de rétention (10), serrant ainsi l'élément de rétention (10) sur les tubes ou câbles (2).

3. Presse-étoupe (1) selon les revendications 1 ou 2, dans lequel :
- l'élément de rétention (10) comprend des organes de friction internes (15) configurés pour venir en prise avec les tubes ou câbles (2).

4. Presse-étoupe (1) selon l'une quelconque des revendications 1 à 3, dans lequel :
- l'élément de rétention (10) comprend un premier organe semi-annulaire (16) et un second organe semi-annulaire (17) pouvant se rapprocher mutuellement pour entourer et serrer les tubes ou câbles (2).

5. Presse-étoupe (1) selon la revendication 4, dans lequel chaque premier (16) et second organe semi-annulaire (17) a deux extrémités de raccordement (11, 12, 13, 14), les extrémités de raccordement (11, 12) du premier organe semi-annulaire (16) sont configurées pour être rapprochées des extrémités de raccordement (13, 14) du second organe semi-annulaire (17) par des surfaces internes coniques (20b) du corps de presse-étoupe (20) pour serrer l'élément de rétention (10) sur des tubes ou câbles (2).

6. Presse-étoupe (1) selon l'une quelconque des revendications 1 à 5, dans lequel :
- un organe annulaire de vis (40) est agencé au niveau de la seconde extrémité (22) du corps de presse-étoupe (20) ;
- l'organe annulaire de vis (40) entoure au moins partiellement le corps de presse-étoupe (20) au niveau de la seconde extrémité (22) et se couple avec la seconde extrémité (22) du corps de presse-étoupe (20).

7. Presse-étoupe (1) selon la revendication 6, dans lequel :
- un dispositif anti-torsion (50) est prévu au niveau de la seconde extrémité (22) du corps de presse-étoupe (20) et coopère avec l'organe annulaire de vis (40) pour empêcher une rotation mutuelle des tubes ou câbles (2) par rapport au corps de presse-étoupe (20) ;
- l'organe annulaire de vis (40) entoure au moins partiellement le dispositif anti-torsion (50) au niveau de la seconde extrémité (22) du corps de presse-étoupe (20).

8. Presse-étoupe (1) selon l'une quelconque des revendications 1 à 7, dans lequel :
- le corps de presse-étoupe (20) comprend un agencement de verrouillage (25) configuré pour verrouiller axialement l'élément de rétention (10) à l'intérieur du corps de presse-étoupe (20).
